(19) Europäisches Patentamt
European Patent Office
Office européen des brevets

(11) **EP 1 955 091 B1**

(12) **EUROPÄISCHE PATENTSCHRIFT**

(45) Veröffentlichungstag und Bekanntmachung des Hinweises auf die Patenterteilung:
**19.12.2012 Patentblatt 2012/51**

(21) Anmeldenummer: **06792270.8**

(22) Anmeldetag: **26.09.2006**

(51) Int Cl.:
***G01S 13/93*** *(2006.01)*     ***G01S 7/40*** *(2006.01)*
***G01S 13/87*** *(2006.01)*

(86) Internationale Anmeldenummer:
**PCT/EP2006/009326**

(87) Internationale Veröffentlichungsnummer:
**WO 2007/062708 (07.06.2007 Gazette 2007/23)**

(54) **VERFAHREN ZUM BETREIBEN EINES RADARSYSTEMS UND RADARSYSTEM**

METHOD FOR THE OPERATION OF A RADAR SYSTEM

PROCEDE POUR FAIRE FONCTIONNER UN SYSTEME RADAR, ET SYSTEME RADAR CORRESPONDANT

(84) Benannte Vertragsstaaten:
**DE ES FR GB IT**

(30) Priorität: **29.11.2005 DE 102005056800**

(43) Veröffentlichungstag der Anmeldung:
**13.08.2008 Patentblatt 2008/33**

(73) Patentinhaber: **Valeo Schalter und Sensoren GmbH**
**74321 Bietigheim-Bissingen (DE)**

(72) Erfinder:
• **HABERLAND, Udo**
**71088 Holzgerlingen (DE)**
• **LÜBBERT, Urs**
**74321 Bietigheim-Bissingen (DE)**

(74) Vertreter: **Pothmann, Karsten et al**
**Valeo Schalter und Sensoren GmbH**
**74319 Bietigheim-Bissingen (DE)**

(56) Entgegenhaltungen:
**EP-A- 0 918 232   EP-A2- 1 026 514**
**WO-A-98/47022**

**Beschreibung**

Die Erfindung betrifft ein Verfahren zum Betreiben eines Radarsystems insbesondere eines Kraftfahrzeugs, das mindestens ein erstes Sensormodul und mindestens ein weiteres Sensormodul aufweist.

Die Erfindung betrifft ferner ein Radarsystem insbesondere eines Kraftfahrzeugs mit mindestens einem ersten Sensormodul und mindestens einem weiteren Sensormodul. Darüberhinaus betrifft die Erfindung auch ein Steuergerät für ein Radarsystem insbesondere eines Kraftfahrzeugs sowie ein Computerprogramm für ein Steuergerät.

Derartige Verfahren und Systeme sind per se bekannt und werden beispielsweise bei Fahrerassistenzsystemen von Kraftfahrzeugen eingesetzt, zum Beispiel um ein Umfeld eines Kraftfahrzeugs zu überwachen oder auch um weitere Systeme wie sog. Lane-Departure-Warning-Systeme oder sonstige Fahrerassistenzsysteme zu unterstützten bzw. zu ergänzen.

Nachteilig an den bekannten Verfahren und Systemen ist der erhebliche Aufwand zur Synchronisation der mehreren Sensormodule, die zu einem zuverlässigen Betrieb eines derartigen Radarsystems erforderlich ist, insbesondere damit sich die mehreren Sensormodule während ihres Betriebs nicht gegenseitig stören.

Derzeit wird eine solche Synchronisation entweder über dedizierte Synchronisationsleitungen erreicht, die einen zusätzlichen Material- und Montageaufwand für eine entsprechende Verkabelung erfordern und folglich die Gesamtkosten des Radarsystems erhöhen.

Bei einer anderen bekannten Lösung wird ein zur Vernetzung der einzelnen Sensormodule vorhandener Datenbus verwendet, um für die Synchronisation erforderliche Signale zu übertragen. Diese Lösung hat den Nachteil, dass die Latenzzeiten der meisten Bussysteme zu groß sind, um eine präzise Synchronisation zu ermöglichen. Andererseits erhöht sich bei derartigen Systemen die Buslast aufgrund übertragener Synchronisationsinformationen entsprechend, so dass unter Umständen eine anderweitige Kommunikation über den Datenbus nur noch eingeschränkt möglich ist.

EP 1 026 514 A2 beschreibt eine Vorrichtung und ein Verfahren zur Erkennung eines Fehlers einer Radarvorrichtung. Das System weist mehrere Antennen auf, die mit einer gemeinsamen Signalerzeugung und Signalauswertung betrieben werden.

Demgemäß ist es Aufgabe der vorliegenden Erfindung, ein Verfahren und ein Radarsystem der eingangs genannten Art dahingehend weiterzuentwickeln, dass eine einfache, kostengünstige und flexible Synchronisation mehrerer Sensormodule möglich ist.

Diese Aufgabe wird bei einem Verfahren der eingangs genannten Art erfindungsgemäß dadurch gelöst, dass ein Erfassungsbereich des ersten Sensormoduls zumindest teilweise einen Erfassungsbereich des weiteren Sensormoduls überlappt, und dass das erste Sensormodul in einem Überwachungsmodus ein von dem weiteren Sensormodul ausgesandtes Sendesignal empfängt, um Informationen über den Betriebszustand des weiteren Sensormoduls zu erhalten.

Das heißt, im Gegensatz zu bekannten Radarsystemen mit mehreren Sensormodulen, bei denen die Erfassungsbereiche der verschiedenen Sensormodule möglichst so ausgelegt werden, dass sie sich nicht gegenseitig überlappen, um eine gegenseitige Beeinflussung auszuschließen, wird erfindungsgemäß vorgeschlagen, eine derartige Überlappung bewusst herzustellen und dazu auszunutzen, dass das erste Sensormodul in seinem Überwachungsmodus ein von dem weiteren Sensormodul ausgesandtes Sendesignal empfängt. Auf diese Weise ist es bei dem erfindungsgemäßen Betriebsverfahren z.B. möglich, dass das erste Sensormodul durch eine Auswertung des von dem weiteren Sensormodul herrührenden Sendesignals Informationen über den Betriebszustand des weiteren Sensormoduls erhält. Dadurch kann das erste Sensormodul besonders vorteilhaft seine eigene Sende- und Empfangsaktivität auf den Betriebszustand des weiteren Sensormoduls abstimmen.

Besonders vorteilhaft kann das erste Sensormodul somit in Abhängigkeit der Informationen über den Betriebszustand des weiteren Sensormoduls betrieben werden.

Bei einer weiteren sehr vorteilhaften Ausführungsform des erfindungsgemäßen Verfahrens ist vorgesehen, dass als Sendesignal ein FMCW (frequency modulated continuous wave)-Signal verwendet wird, bei dem die Frequenz zeitlich zwischen einer Startfrequenz und einer Stopfrequenz verändert wird.

Bei solchen auch als chirp-Signalen bezeichneten Sendesignalen wird die Frequenz des Sendesignals ausgehend von der Startfrequenz beispielsweise zeitlinear erhöht, so dass das chirp-Signal beispielsweise durch die Angabe seiner Startfrequenz, seiner Stopfrequenz und seiner Signaldauer vollständig bestimmt ist.

Darüber hinaus ist es auch möglich, chirp-Signale als Sendesignale zu verwenden, die keine zeitlineare Veränderung der Frequenz aufweisen. Ferner können auch so genannte stepped FMCW-, up-down-FMCW-, sonstige chirp-Signale oder ganz allgemein FSK-Signale oder Kombinationen hieraus als Sendesignal verwendet werden.

Bei einer weiteren besonders vorteilhaften Ausführungsform des erfindungsgemäßen Verfahrens ist vorgesehen, dass ein Empfänger des ersten Sensormoduls in dem Überwachungsmodus nur empfangene Signale mit einer Frequenz, die zwischen der Startfrequenz des FMCW-Signals und der Stopfrequenz des FMCW-Signals liegt, auswertet. Hierdurch wird der Aufwand zur Überwachung des von einem weiteren Sensormodul stammenden Sendesignals in dem ersten Sensormodul deutlich reduziert. Darüberhinaus wird durch diese Maßnahme auch die Störanfälligkeit des erfindungsgemäßen Radarsystems reduziert, weil eine Auswertung anderer als der zur Synchronisation erforderlichen Sendesignale nicht stattfindet.

Beispielsweise kann ein in dem Empfänger des ersten Sensormoduls vorgesehener spannungsgesteuerter Oszillator (VCO, voltage controlled oscillator), der ein Mischsignal zum Heruntermischen eines empfangenen Sendesignals erzeugt, in dem erfindungsgemäßen Überwachungsmodus so eingestellt sein, dass er bei einer konstanten Frequenz betrieben wird, die innerhalb des durch die Startfrequenz und die Stopfrequenz des FMCW-Sendesignals definierten Frequenzbereichs liegt. In diesem Fall ist sichergestellt, dass ein von dem weiteren Sensormodul als Sendesignal ausgesandtes FMCW-Signal zumindest für eine kurze Zeit dieselbe Frequenz aufweist wie der spannungsgesteuerte Oszillator des Empfängers des ersten Sensormoduls, so dass zumindest zu diesem Zeitpunkt das Sendesignal von dem ersten Sensormodul beziehungsweise dessen Empfänger registriert wird.

Aus der Empfangszeit und der Frequenz des empfangenen Sendesignals, die in diesem Fall mit der Frequenz des lokalen spannungsgesteuerten Oszillators übereinstimmt, sowie unter Kenntnis des Typs des von dem weiteren Sensormodul verwendeten Sendesignals kann in dem ersten Sensormodul beispielsweise auf einen Startzeitpunkt geschlossen werden, zu dem das weitere Sensormodul begonnen hat, das Sendesignal auszusenden beziehungsweise auch auf einen Endzeitpunkt, zu dem das weitere Sensormodul aufhört, das Sendesignal auszusenden. Unter Kenntnis dieser Daten kann eine sehr präzise Synchronisation des ersten Sensormoduls mit dem weiteren Sensormodul durchgeführt werden.

Sofern alle Sensormodule des erfindungsgemäßen Radarsystems gleichartig ausgebildet sind und insbesondere auch dieselben Sendesignale verwenden, kann unter Anwendung des erfindungsgemäßen Verfahrens demnach eine Synchronisation der Sensormodule auf besonders einfache Weise erreicht werden.

Bei einer weiteren sehr vorteilhaften Ausführungsform des erfindungsgemäßen Verfahrens ist vorgesehen, dass das erste und/oder das weitere Sensormodul einen Radarsensor mit steuerbarer Richtcharakteristik aufweist. Eine derartige steuerbare Richtcharakteristik kann beispielsweise durch eine Vielzahl phasengesteuerter Antennen, die auch als phasedarray bezeichnet werden, erreicht werden und ermöglicht beispielsweise, dass der jeweilige Radarsensor beziehungsweise das entsprechende Sensormodul pro Zeitabschnitt jeweils nur einen kleinen Teilbereich seines gesamten Erfassungsbereichs überwacht, wodurch u.a. eine entsprechend höhere räumliche Auflösung bei der Hindernisdetektion z.B. in einem Umfeld eines Kraftfahrzeugs erzielt wird.

Besonders vorteilhaft sind die Erfassungsbereiche der verschiedenen Sensormodule hierbei so angeordnet, dass sie sich nur in einem verhältnismäßig kleinen Raumbereich überlappen. In diesem Fall ist durch eine gezielte Formung der Richtcharakteristik des Radarsensors bzw. dessen Antennen nach wie vor die Möglichkeit gegeben, die erfindungsgemäße Synchronisation durch die Überwachung eines Sendesignals eines benachbarten Sensormoduls durchzuführen, während das Risiko einer unbeabsichtigten gegenseitigen Störung der benachbarten Sensormodule weitgehend ausgeschlossen wird, solange die Richtcharakteristik des jeweiligen Radarsensors nicht in den Überlappungsbereich hineinreicht.

Beispielsweise kann ein Sensormodul seinen gesamten Erfassungsbereich zyklisch untersuchen, indem es eine verhältnismäßig schmale Hauptkeule für die Richtcharakteristik seines Radarsensors einstellt, die nacheinander über die verschiedenen Teilbereiche des gesamten Erfassungsbereichs verschwenkt wird. In diesem Fall ergibt sich nur zu denjenigen Zeitpunkten überhaupt eine tatsächliche Überlappung der Erfassungsbereiche benachbarter Sensormodule, in denen die jeweiligen Hauptkeulen der Radarsensoren benachbarter Sensormodule denjenigen Teilbereich ihres Erfassungsbereichs einnehmen, der in dem Überlappungsbereich der Erfassungsbereiche der benachbarten Sensormodule liegt.

Die Synchronisation eines Sensormoduls auf ein benachbartes Sensormodul kann in diesem Fall beispielsweise dadurch erfolgen, dass das Sensormodul für eine vorgebbare Zeit seinen Überwachungsmodus einnimmt und in diesem vorzugsweise nur den Überlappungsbereich überwacht. Sobald ein Sendesignal des benachbarten Sensormoduls, das zyklisch seinen Erfassungsbereich untersucht und demnach auch periodisch den Überlappungsbereich mit seinem Sendesignal beaufschlagt, von dem zu synchronisierenden Sensormodul erfasst wird, ist die erfindungsgemäße Synchronisation möglich.

Bei einer weiteren sehr vorteilhaften Ausführungsform des erfindungsgemäßen Verfahrens wird das Sensormodul periodisch in den Überwachungsmodus versetzt. Dadurch ist gewährleistet, dass eventuelle Ungenauigkeiten in einer lokalen Zeitbasis eines Sensormoduls nicht zum völligen Verlust der Synchronisation zwischen mehreren Sensormodulen führen, weil durch das periodische Einnehmen des Überwachungsmodus ein regelmäßiger Abgleich ermöglicht wird.

Besonders vorteilhaft kann ein Sensormodul auch dann zum Zwecke einer Synchronisation in seinen Überwachungsmodus versetzt werden, wenn es bei einem Normalbetrieb wie beispielsweise bei einer Hinderniserkennung ein Übersprechen oder eine sonstige Störung empfangen bzw. ausgewertet hat, die auf einen unbeabsichtigten Empfang eines Sendesignals eines benachbarten Sensormoduls und demnach auf einen Verlust der Synchronisation hindeutet.

Besonders vorteilhaft wird das Sensormodul bei einer weiteren Ausführungsform des erfindungsgemäßen Verfahrens unmittelbar nach dessen Aktivierung in den Überwachungsmodus versetzt. Auf diese Weise ist eine möglichst schnelle Synchronisation eines zunächst nicht mit seinen benachbarten Sensormodulen synchronisierten Sensormoduls gegeben.

Sehr vorteilhaft ist bei einer weiteren Ausführungsform des erfindungsgemäßen Verfahrens vorgesehen, dass das Sensormodul den Überwachungsmodus nach einer vorgebbaren Wartezeit oder nach einer zufallsabhängigen Wartezeit verlässt. Dadurch ist sichergestellt, dass beispielsweise bei einem Totalausfall eines benachbarten Sensormoduls dennoch eine Funktion des betreffenden Sensormoduls hinsichtlich einer Abstandsbestimmung oder einen Hindernisdetektion oder dergleichen gewährleistet ist, auch wenn keine Synchronisation mit dem ausgefallenen benachbarten Sensormodul vorgenommen werden kann.

Das Vorsehen einer zufallsabhängigen Wartezeit ist besonders vorteilhaft, weil hierdurch weitestgehend ausgeschlossen wird, dass zeitgleich aktivierte benachbarte Sensormodule zu derselben Zeit ihren Überwachungsmodus verlassen, so dass keine gegenseitige Synchronisation möglich ist.

Die Wahrscheinlichkeit dafür, dass zwei zeitgleich aktivierte Sensormodule in demselben Zeitpunkt den Überwachungsmodus verlassen, ist verhältnismäßig gering. Daher nimmt mit hoher Wahrscheinlichkeit eines der beiden Sensormodule nach Ablauf seiner zufallsabhängigen Wartezeit beispielsweise einen Normalbetrieb ein, indem es seine Hauptfunktion der Hinderniserkennung oder dergleichen erfüllt. Das andere, benachbarte Sensormodul verharrt nach wie vor in dem Überwachungsmodus, weil seine zufallsabhängige Wartezeit noch nicht abgelaufen ist. Dementsprechend kann dieses andere Sensormodul sich auf das nunmehr bereits in seinem normalen Betriebszustand befindliche benachbarte Sensormodul synchronisieren.

Bei einer weiteren sehr vorteilhaften Ausführungsform des erfindungsgemäßen Verfahrens ist vorgesehen, dass das von dem weiteren Sensormodul ausgesandte Sendesignal in dem weiteren Sensormodul zur Messung eines Abstands zwischen dem weiteren Sensormodul und einem in dem Erfassungsbereich des weiteren Sensormoduls befindlichen Objekt verwendet wird. Das heißt, um ein in seinem Überwachungsmodus befindliches Sensormodul auf die erfindungsgemäße Weise mit einem benachbarten Sensormodul synchronisieren zu können, ist es nicht erforderlich, dass das benachbarte Sensormodul ein besonderes Sendesignal aussendet, das beispielsweise keine Hinderniserkennung oder dergleichen ermöglicht. Vielmehr kann das benachbarte Sensormodul sehr vorteilhaft seinen normalen Betriebszustand aufweisen und für seine Funktionalität erforderliche Sendesignale wie beispielsweise FMCW-Sendesignale aussenden. Damit ist während der erfindungsgemäßen Synchronisation eines Sensormoduls zumindest ein eingeschränkter Betrieb des Radarsystems dadurch gegeben, dass nicht in dem Überwachungsmodus befindliche Sensormodule bereits Daten über gegebenenfalls vorhandene Hindernisse oder dergleichen erfassen können.

Bei einer weiteren sehr vorteilhaften Ausführungsform des erfindungsgemäßen Verfahrens ist vorgesehen, dass das weitere Sensormodul ein spezielles Synchronisationsinformationen enthaltendes Sendesignal in den Erfassungsbereich des ersten Sensormoduls bzw. in den Überlappungsbereich der Erfassungsbereich der benachbarten Sensormodule sendet. In dieser Verfahrensvariante können gegebenenfalls besonders störsichere Synchronisationsinformationen oder andere Daten von dem weiteren Sensormodul zu dem in seinem Überwachungsmodus befindlichen Sensormodul übertragen werden.

Bei einer anderen sehr vorteilhaften Ausführungsform des erfindungsgemäßen Verfahrens wird das von einem im Überwachungsmodus befindlichen Sensormodul empfangene Sendesignal eines weiteren Sensormoduls einer Quadraturdemodulation unterzogen, um entsprechende Informationen über den Betrag und die Phase des empfangenen Sendesignals zu erhalten. Hierbei kann das empfangene Sendesignal durch Auswahl einer geeigneten Mischfrequenz beispielsweise in eine Basisbandlage versetzt werden, so dass durch eine einfache Signalverarbeitung beispielsweise die Intensität des empfangenen Sendesignals oder weitere charakteristische Eigenschaften des empfangenen Sendesignals auf einfache Weise untersucht werden können. Hierdurch ist besonders vorteilhaft auch eine einfache Plausibilisierung des empfangenen Sendesignals möglich. Beispielsweise kann insbesondere auch die Amplitude des empfangenen Sendesignals einer Plausibilitätsbetrachtung unterzogen werden, um auszuschließen, dass zur Synchronisation irrtümlich Sendesignale ausgewertet werden, die z.B. von Sensormodulen anderer Kraftfahrzeuge oder weiterer Systeme stammen, die sich im Umfeld des erfindungsgemäßen Radarsystems befinden.

Besonders vorteilhaft können unter Anwendung des erfindungsgemäßen Prinzips auch gleichzeitig mehrere jeweils in ihrem Überwachungsmodus befindliche Sensormodule ein von einem weiteren Sensormodul ausgesandtes Sendesignal empfangen, um Informationen über den Betriebszustand des weiteren Sensormoduls zu erhalten. Das heißt, es ist erfindungsgemäß auch möglich, dass gleichzeitig mehrere noch nicht synchronisierte Sensormodule das Sendesignal eines benachbarten Sensormoduls überwachen und sich auf den Betrieb dieses Sensormoduls synchronisieren.

Als eine weitere Lösung der Aufgabe der vorliegenden Erfindung ist ein Radarsystem gemäß Patentanspruch 14 angegeben.

Noch eine weitere Lösung der Aufgabe der vorliegenden Erfindung ist in Form eines Steuergeräts gemäß Patentanspruch 16 und eines Computerprogramms gemäß Patentanspruch 17 angegeben.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und der Beschreibung erwähnten Merkmale jeweils einzeln oder in beliebiger Kombination erfindungswesentlich sein.

In der Zeichnung zeigt:

Figur 1   eine erste Ausführungsform eines erfindungsgemäßen Radarsystems,

Figur 2   ein Zustandsdiagramm einer ersten Ausführungsform des erfindungsgemäßen Verfahrens,

Figur 3a   den Zeitverlauf einer Empfangsfrequenz eines Sensormoduls gemäß einer weiteren Ausführungsform der vorliegenden Erfindung,

Figur 3b   den Zeitverlauf der Frequenz eines Sendesignals gemäß einer weiteren Variante des erfindungsgemäßen Verfahrens,

Figur 3c   den Zeitverlauf eines Signals, das von einem in seinem Überwachungsmodus befindlichen Sensormodul bei der Auswertung des Sendesignals eines benachbarten Sensormoduls erhalten wird, und

Figur 4   eine vereinfachtes Blockschaltbild einer weiteren Ausführungsform eines erfindungsgemäßen Radarsystems.

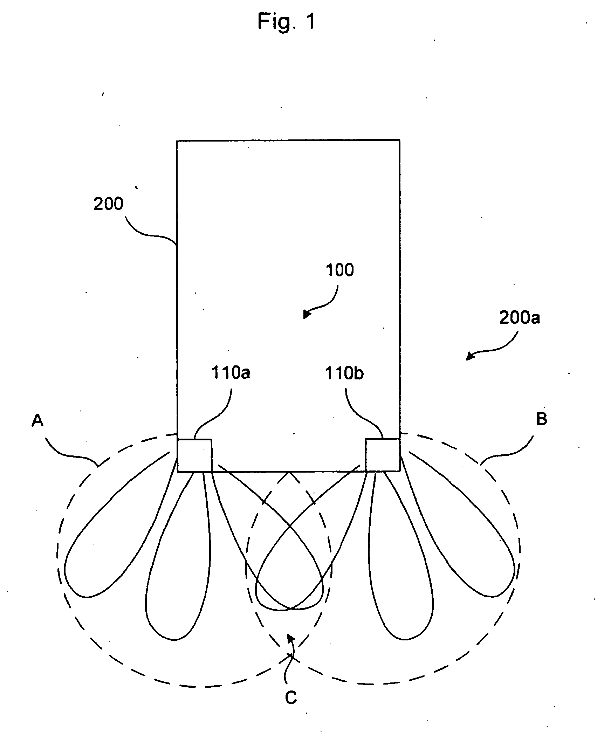

Figur 1 zeigt schematisch eine erste Ausführungsform des erfindungsgemäßen Radarsystems 100. Das Radarsystem 100 weist ein erstes Sensormodul 110a und ein zweites Sensormodul 110b auf. Wie aus Figur 1 ersichtlich, sind die Sensormodule 110a, 110b in einem Heckbereich 200a eines durch das Rechteck 200 angedeuteten Kraftfahrzeugs angeordnet.

Jedes Sensormodul 110a, 110b weist einen nicht abgebildeten Radarsensor auf, der zum Aussenden und zum Empfangen von Radarsignalen geeignet ist. Besonders vorteilhaft weist jeder der Radarsensoren bzw. dessen Antennen eine steuerbare Richtcharakteristik auf und kann auf diese Weise verhältnismäßig schmale Hauptkeulen ausbilden, um jeweils nur einen Teilbereich des dem jeweiligen Sensormodul 110a, 110b zugeordneten Erfassungsbereichs A, B zu überwachen. In Figur 1 sind zur Veranschaulichung dieses Sachverhalts beispielhaft jeweils drei mögliche und nicht näher bezeichnete Hauptkeulen für den Radarsensor des ersten Sensormoduls 110a beziehungsweise drei mögliche und nicht näher bezeichnete Hauptkeulen für den Radarsensor des zweiten Sensormoduls 110b angedeutet.

Bevorzugt kann der jeweilige Radarsensor jeweils eine der abgebildeten Hauptkeulen einstellen und diese innerhalb des gesamten Erfassungsbereichs A, B verschwenken, so dass zyklisch jeder Teilbereich des jeweiligen gesamten Erfassungsbereichs A, B von einer Hauptkeule überstrichen wird.

Erfindungsgemäß sind die Radarsensoren beziehungsweise deren Sensormodule 110a, 110b so ausgebildet, dass sich die Erfassungsbereiche A, B der Sensormodule 110a, 110b in einem in Figur 1 mit dem Bezugszeichen C bezeichneten Überlappungsbereich überlappen. Dadurch ist es möglich, dass beispielsweise von dem zweiten Sensormodul 110b in den Überlappungsbereich C ausgesandte Radarsignale von dem ersten Sensormodul 110a empfangen werden können.

Hierzu ist es allerdings erforderlich, dass die Richtdiagramme bzw. Richtcharakteristiken der entsprechenden Radarsensoren beispielsweise eine durch die in den Überlappungsbereich C hineinragenden Hauptkeulen angedeutete Konfiguration gemäß Figur 1 einnehmen, in der sie jeweils zumindest einen Teilbereich des Überlappungsbereichs C abdecken.

Erfindungsgemäß ist vorgesehen, dass die Sensormodule 110a, 110b zumindest zeitweise einen Überwachungsmodus einnehmen, in dem sie ein von dem jeweils benachbarten Sensormodul 110a, 110b ausgesandtes Sendesignal empfangen, um Informationen über den Betriebszustand des benachbarten Sensormoduls 110a, 110b zu erhalten und sich gegebenenfalls auf das benachbarte Sensormodul 110a, 110b zu synchronisieren.

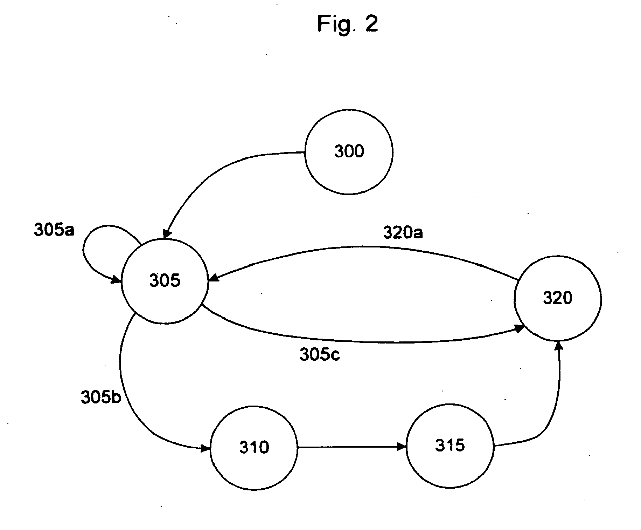

Nachfolgend ist die erfindungsgemäße Synchronisation der Sensormodule 110a, 110b aufeinander unter Bezugnahme auf das in Figur 2 abgebildete Zustandsdiagramm näher beschrieben. Das Zustandsdiagramm aus Figur 2 gibt beispielhaft einige Betriebszustände eines Sensormoduls 110a, 110b an, die es während der Durchführung des erfindungsgemäßen Verfahrens annehmen kann.

Zur weiteren Beschreibung wird davon ausgegangen, dass beide Sensormodule 110a, 110b zeitgleich aktiviert werden, was beispielsweise bei dem Inbetriebnehmen des Kraftfahrzeugs 200 (Figur 1) durch das Einschalten der Zündung erfolgt.

Besonders vorteilhaft können die Sensormodule 110a, 110b abgesehen von ihrer Einbaulage in dem Kraftfahrzeug 200 völlig identisch ausgebildet sein. Dementsprechend beziehen sich die nachstehenden Ausführungen beispielhaft nur auf das erste Sensormodul 110a, können ohne Weiteres jedoch direkt auf das zweite Sensormodul 110b sowie auf ggf. vorhandene weitere Sensormodule übertragen werden.

Wie aus Figur 2 ersichtlich, nimmt das Sensormodul 110a unmittelbar nach seiner Aktivierung einen Initialisierungszustand 300 ein. Nach Abschluss entsprechender Initialisierungsvorgänge, die beispielsweise eine Aktivierung des in dem Sensormodul 110a enthaltenen Radarsensors oder eine Kalibrierung weiterer Komponenten, eine Aktivierung eines lokalen Steuergeräts (nicht gezeigt) des Sensormoduls 110a oder dergleichen umfassen können, geht das Sensormodul 110a in den erfindungsgemäßen Überwachungsmodus 305 über.

In dem Überwachungsmodus 305 ist der Radarsensor des Sensormoduls 110a so konfiguriert, dass er zumindest einen Teil des in Figur 1 angedeuteten Überlappungsbereichs C erfasst, was beispielsweise durch Einstellen einer auf den Überlappungsbereich C gerichteten Hauptkeule des Antennensystems des Radarsensors erreicht wird. Das Sensormodul 110a ist dementsprechend in der Lage, von dem benachbarten Sensormodul 110b in den Überlappungsbereich C ausgesandte Sendesignale zu empfangen.

Erfindungsgemäß verbleibt das erste Sensormodul 110a so lange in dem Überwachungsmodus 305, bis es tatsächlich ein von dem benachbarten Sensormodul 110b ausgesandtes Sendesignal empfangen hat. Dieser Sachverhalt ist durch den Zustandsübergang 305a in Figur 2 angedeutet.

Sobald das Sensormodul 110a in seinem Überwachungsmodus 305 ein von dem Sensormodul 110b stammendes Sendesignal empfängt, wechselt es von dem Überwachungsmodus 305 durch den Zustandsübergang 305b in einen Auswertmodus 310, indem es das empfangene Sendesignal des zweiten Sensormoduls 110b analysiert, um Informationen über den Betriebszustand des zweiten Sensormoduls 110b zu erhalten.

Nach Abschluss dieser Analyse verlässt das Sensormodul 110a den Auswertmodus 310 und wechselt in den Konfigurationsmodus 315, in dem es seinen Radarsensor entsprechend der Auswertung 310 konfiguriert und sich auf den Betrieb des Sensormoduls 110b synchronisiert. Die Synchronisation kann beispielsweise das Kalibrieren einer lokalen Zeitbasis wie z.B. eines Timers eines lokalen Steuergeräts usw. umfassen und ermöglicht es, in dem Sensormodul 110a beispielsweise diejenigen zukünftigen Zeitintervalle zu berechnen, in denen das benachbarte Sensormodul 110b sein Sendesignal in den Überlappungsbereich C aussendet.

Nach erfolgreicher Synchronisation wechselt das erste Sensormodul 110a schließlich in den Normalbetrieb 320, in dem es die Richtcharakteristik seines Radarsensors periodisch verändert, um zyklisch Teilbereiche des Erfassungsbereichs A beispielsweise auf Hindernisse oder andere Objekte zu überwachen.

Vermöge der erfindungsgemäßen Synchronisation des Sensormoduls 110a auf den Betrieb des benachbarten Sensormoduls 110b erfolgt die Überwachung des Erfassungsbereichs A durch das Sensormodul 110a besonders vorteilhaft derart, dass das Sensormodul 110a den Überlappungsbereich C beispielsweise nur zu solchen Zeitpunkten überwacht, zu denen das benachbarte Sensormodul 110b nicht ebenfalls den Überlappungsbereich C überwacht, so dass eine gegenseitige Störung der Sensormodule 110a, 110b während ihres Normalbetriebs 320 ausgeschlossen ist.

Falls das erste Sensormodul 110a während seines Normalbetriebs 320 mit der Zeit jedoch seine Synchronisation zu dem benachbarten Sensormodul 110b verliert, kann es vorkommen, dass das Sensormodul 110a den Überlappungsbereich C zu derselben Zeit überwacht, zu der auch das benachbarte Sensormodul 110b den Überlappungsbereich C überwacht. In diesem Fall kommt es zu einem unerwünschten Übersprechen zwischen den Sensormodulen 110a, 110b.

Ein derartiges unerwünschtes Übersprechen wird beispielsweise von dem ersten Sensormodul 110a im Rahmen einer Auswertung der in dem Normalbetrieb 320 ausgesendeten beziehungsweise empfangenen Radarsignale erkannt, woraufhin das erste Sensormodul 110a den Normalbetrieb 320 verlässt und mittels des Zustandsübergangs 320a erneut den erfindungsgemäßen Überwachungsmodus 305 einnimmt. Anschließend erfolgt - wie bereits vorstehend beschrieben - eine erneute erfindungsgemäße Synchronisation des ersten Sensormoduls 110a auf das zweite Sensormodul 110b.

Alternativ zu der Erkennung des unerwünschten Übersprechens durch das erste Sensormodul 110a kann eine derartige Erkennung auch von dem zweiten Sensormodul 110b vorgenommen werden, das daraufhin in gleicher Weise in seinen Überwachungsmodus 305 wechselt.

Um jedoch zu verhindern, dass beide Sensormodule 110a, 110b gleichzeitig erneut den Überwachungsmodus 305 annehmen, ist bei einer weiteren sehr vorteilhaften Ausführungsform des erfindungsgemäßen Verfahrens vorgeschlagen, dass bei einem zyklischen Überwachen von Teilbereichen des jeweiligen Erfassungsbereichs A, B und bei der Erkennung von Übersprechen das betreffende Sensormodul 110a, 110b zunächst für eine zufallsabhängige Wartezeit beziehungsweise Zykluszahl in seinem Normalbetrieb 320 verbleibt, bevor es in den Überwachungsmodus 305 wechselt. Hierdurch ist gewährleistet, dass dasjenige Sensormodul 110a, das zufallsgesteuert über den Zustandsübergang 320a zuerst in seinen Überwachungsmodus 305 wechselt, erneut eine Synchronisation durchführen kann, während das andere Sensormodul 110b nach wie vor in seinem Normalbetrieb 320 verbleibt.

Bei einer weiteren sehr vorteilhaften Ausführungsform des erfindungsgemäßen Verfahrens kann das Sensormodul 110a nach dem Einnehmen des Überwachungsmodus 305 beispielsweise auch für eine zufallsabhängige Wartezeit anstelle einer konstanten Wartezeit in dem Überwachungsmodus 305 verbleiben. Falls innerhalb dieser Wartezeit kein von dem benachbarten Sensormodul 110b stammendes Sendesignal empfangen beziehungsweise erkannt worden ist, geht das entsprechende Sensormodul 110a direkt von dem Überwachungsmodus 305 in den Normalbetrieb 320 über, vergleiche den Zustandsübergang 305c. Hierdurch ist gewährleistet, dass ein betreffendes Sensormodul 110a beispielsweise bei einem Totalausfall aller benachbarten Sensormodule 110b auch ohne den Empfang eines Sendesignals von einem benachbarten Sensormodul 100b in den Normalbetrieb 320 übergeht und einen zumindest teilweisen Betrieb des erfindungsgemäßen Radarsystems 100 (Figur 1) aufrechterhält.

Durch den Zustandsübergang 305c nach einer entsprechenden zufallsabhängigen Wartezeit ist weiter gewährleistet, dass mit hoher Wahrscheinlichkeit eines der Sensormodule 110b nach der Initialisierung 300 den Normalbetrieb 320 einnimmt, ohne zuvor eine erfindungsgemäße Synchronisation durchzuführen. Dies ermöglicht den weiteren Sensormodulen 110a des Radarsystems 100, ihrerseits die bereits mehrfach beschriebene Synchronisation bezüglich dieses Sensormoduls 110b durchzuführen.

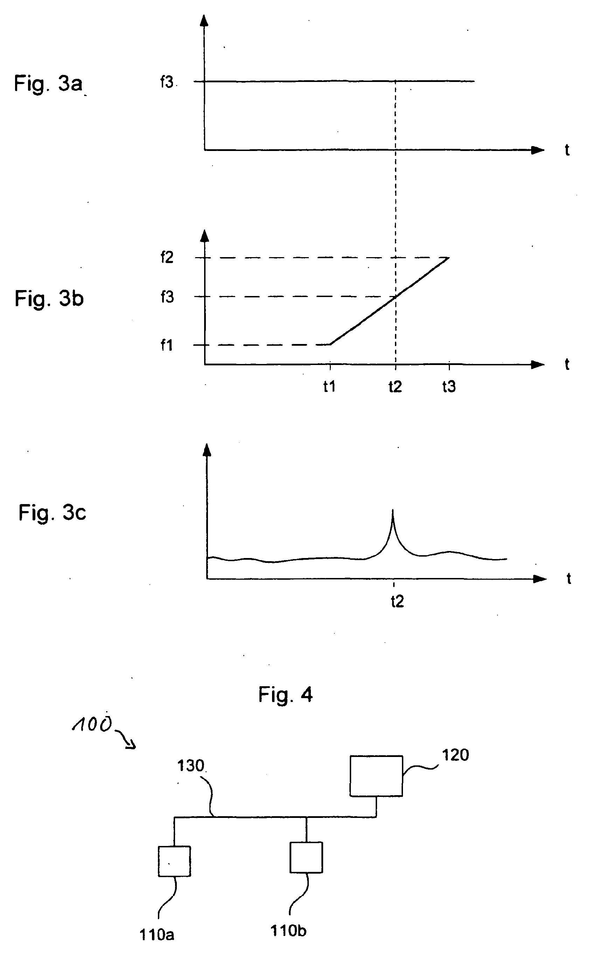

Nachstehend ist unter Bezug auf die Figuren 3a bis 3c für eine besonders vorteilhafte Ausführungsform des erfindungsgemäßen Verfahrens die Synchronisation beziehungsweise Auswertung 310 (Figur 2) des von einem benachbarten Sensormodul empfangenen Sendesignals näher beschrieben.

Figur 3a zeigt hierbei einen Zeitverlauf der Mischfrequenz eines in dem Radarsensor des Sensormoduls 110a enthaltenen Mischers. Wie aus Figur 3a ersichtlich, weist der Mischer eine zeitlich konstante Mischfrequenz f3 auf, während sich das Sensormodul 110a in seinem Überwachungsmodus befindet.

Figur 3b zeigt den Zeitverlauf eines auch als chirp-Signal bezeichneten FMCW (frequency modulated continuous wave)-Sendesignals, wie es periodisch von dem Sensormodul 110b unter anderem auch in den Überlappungsbereich C (Figur 1) ausgesandt wird.

Wie aus Figur 3b ersichtlich, weist das Sendesignal eine zeitlineare Änderung seiner Frequenz ausgehend von einer Startfrequenz f1 bis hin zu einer Stopfrequenz f2 auf. Das heißt, innerhalb der gesamten Sendedauer T = t3 - t1 wird die Frequenz des von dem Sensormodul 110b ausgesandten Sendesignals von der Startfrequenz f1 zeitlich linear bis zu der Stopfrequenz f2 verändert.

Dadurch ist gewährleistet, dass der Radarsensor des ersten Sensormoduls 110a mit seinem konstant bei der Mischfrequenz f3 (Figur 3a) betriebenen Mischer genau dann ein dem Sendesignal entsprechendes Empfangssignal erkennt, wenn die Frequenz des in Figur 3b abgebildeten chirp-Sendesignals des Sensormoduls 110b identisch ist mit der Mischfrequenz f3 des Mischers.

Gemäß dem in Figur 3b abgebildeten chirp-Sendesignal ist dies zum Zeitpunkt t2 der Fall, das heißt zu dem Zeitpunkt t2 weist das chirp-Sendesignal gemäß Figur 3b dieselbe Frequenz f3 auf wie das von dem Mischer zum Mischen des empfangenen Sendesignals verwendete Signal. Dementsprechend wird in dem Sensormodul 110a durch die Auswertung des chirp-Sendesignals ein zu dem in Figur 3c gezeigten Auswertesignal vergleichbares Signal erhalten, das ein Maximum bei dem Zeitpunkt t = t2 aufweist.

Das heißt, durch die vorstehend beschriebene Auswertung des von dem Sensormodul 110b ausgesandten FMCW- bzw. chirp-Sendesignals kann das erste Sensormodul 110a unter Kenntnis des Empfangszeitpunkts t2 und der von seinem Mischer verwendeten Mischfrequenz f3 aus den bekannten Eigenschaften T = t3 - t1, f1, f2 des FMCW-Sendesignals (Figur 3b) auf den Betriebszustand des benachbarten Sensormoduls 110b schließen.

Insbesondere kann unter Kenntnis der sogenannten chirp-Dauer T, das heißt derjenigen Zeit, für die das Sendesignal zeitlinear frequenzmoduliert ausgesendet wird, auch beispielsweise der Startzeitpunkt t1 des chirp-Sendesignals oder auch der Endzeitpunkt t3 = t1 + T ermittelt werden.

Hierzu wird insbesondere sehr vorteilhaft die folgende Äquivalenz ausgenutzt:

$$\frac{f2 - f1}{f3 - f1} = \frac{T}{t2 - t1} = \frac{t3 - t1}{t2 - t1}.$$

Auf diese Weise ist es dem ersten Sensormodul 110a möglich, die Startzeitpunkte t1 für seine eigenen Sendesignale in Abhängigkeit der zuvor ermittelten Parameter der von dem Sensormodul 110b ausgesandten Sendesignale festzulegen.

Unter Kenntnis derjenigen Algorithmen, anhand derer bei den Sensormodulen 110a, 110b beispielsweise die Hauptkeulen der jeweiligen Radarsensoren verändert bzw. über den Erfassungsbereich A, B (Figur 1) geschwenkt werden, kann der Betrieb des Radarsensors eines bestimmten Sensormoduls 110a beispielsweise so gesteuert werden, dass kein unerwünschtes Übersprechen durch ein zeitliches Zusammentreffen von Hauptkeulen verschiedener Sensormodule 110a, 110b in dem Überlappungsbereich C eintritt.

Separate Datenleitungen zwischen den Sensormodulen zur Übertragung von Synchronisationssignalen, wie sie bei herkömmlichen Systemen vorgesehen sind, sind daher bei dem erfindungsgemäßen Radarsystem 100 bzw. dem erfindungsgemäßen Betriebsverfahren nicht erforderlich.

Insbesondere wird auch ein ggf. vorhandener Datenbus 130, wie er bei dem schematisch in Figur 4 abgebildeten Radarsystem 100 zur Kommunikation der einzelnen Sensormodule 110a, 110b mit einem zentralen Steuergerät 120 vorgesehen ist, nicht zu Synchronisationszwecken verwendet, so dass die Buslast des Datenbusses 130 hierdurch nicht gesteigert wird und dementsprechend die restliche Datenkommunikation auf dem Bus ungestört und zuverlässig ablaufen kann. Neben dem zentralen Steuergerät 120 können vorteilhaft auch in jedem Sensormodul 110a, 110b entsprechende, zu dem zentralen Steuergerät 120 vergleichbare lokale Steuergeräte (nicht gezeigt) vorgesehen sein. Die lokalen Steuergeräte steuern beispielsweise den Radarsensor bzw. dessen Antennen sowie die Auswertung von Sendesignalen sowie ganz allgemein den Betrieb eines Sensormoduls 110a, 110b.

Neben der in Figur 3b abgebildeten zeitlinearen Frequenzmodulation des Sendesignals ist es auch möglich, nicht lineare chirp-Signale oder so genannte stepped FMCW, up-down-FMCW oder allgemein andere FSK-Signale oder Kombinationen hieraus als Sendesignal zu verwenden.

Ganz allgemein kann jedes denkbare Sendesignal, das von einem Sensormodul 110b zur Realisierung der Hauptfunktionalität des Sensormoduls 110b wie z.B. zur Hinderniserkennung und dergleichen verwendet wird, von einem in dem Überwachungsmodus 305 (Figur 2) befindlichen Sensormodul 110a zur Synchronisation mit dem Sensormodul 110b genutzt werden, so dass trotz fehlender Synchronisation zumindest eine eingeschränkte Funktion des Radarsystems 100 gegeben ist.

Alternativ hierzu kann ein Sensormodul 110a, 110b jedoch auch gezielt ein z.B. besondere Synchronisationsinformationen oder sonstige Daten enthaltendes Sendesignal in den Überlappungsbereich C aussenden, um entsprechende Informationen an ein dieses Sendesignal empfangendes Sensormodul zu übertragen.

Das von einem in seinem Überwachungsmodus 305 befindlichen Sensormodul 110a empfangene Sendesignal des benachbarten Sensormoduls 110b kann besonders vorteilhaft auch einer Quadraturdemodulation unterzogen werden, um entsprechende Informationen über den Betrag und auch die Phase des empfangenen Sendesignals zu erhalten. Hierbei kann das empfangene Sendesignal durch Auswahl einer geeigneten Mischfrequenz f3 beispielsweise direkt in eine Basisbandlage versetzt werden, so dass im Wege einer wenig aufwendigen Signalverarbeitung beispielsweise die Intensität des empfangenen Sendesignals oder weitere charakteristische Eigenschaften des empfangenen Sendesignals untersucht werden können. Die Intensität des empfangenen Sendesignals kann auch durch eine herkömmliche Demodulation ermittelt werden, wobei dementsprechend auf einen Quadraturdemodulator verzichtet werden kann.

Besonders vorteilhaft wird erfindungsgemäß insbesondere auch eine Amplitude des empfangenen Sendesignals bzw. eines damit korrespondierenden demodulierten Signals analysiert, um im Wege einer Plausibilitätsbetrachtung auszuschließen, dass zur Synchronisation irrtümlich Sendesignale ausgewertet werden, die z.B. von Sensormodulen anderer Kraftfahrzeuge oder weiterer Systeme stammen, die sich im Umfeld des erfindungsgemäßen Radarsystems 100 befinden.

Unter Anwendung des erfindungsgemäßen Prinzips können gleichzeitig auch mehrere jeweils in ihrem Überwachungsmodus befindliche Sensormodule ein von einem weiteren Sensormodul ausgesandtes Sendesignal empfangen, um Informationen über den Betriebszustand des weiteren Sensormoduls zu erhalten. Das heißt, es ist erfindungsgemäß auch möglich, dass gleichzeitig mehrere noch nicht synchronisierte Sensormodule das Sendesignal eines benachbarten Sensormoduls überwachen und sich auf den Betrieb dieses Sensormoduls synchronisieren.

Sofern ein Sensormodul 110a mit einem Radarsensor versehen ist, der einen separaten Sender und einen separaten Empfänger aufweist, kann das Sensormodul 110a dementsprechend auch während seines Normalbetriebs 320 die vorstehend im Zusammenhang mit dem Überwachungsmodus 305 beschriebene Funktionalität realisieren, bei der das Sensormodul 110a von einem benachbarten Sensormodul 110b ausgesandte Sendesignale zu Synchronisationszwecken empfängt und auswertet. In diesem Fall werden von den beiden Sensormodulen 110a, 110b vorzugsweise unterschiedliche Sendesignale wie z.B. Sendesignale mit einer verschiedenen chirp-Dauer bzw. Frequenzmodulation verwendet, um die entsprechende Auswertung zu erleichtern.

Von besonderer Bedeutung ist die Realisierung des erfindungsgemäßen Verfahrens in Form eines Computerprogramms, das beispielsweise in einem elektronischen Speicher wie zum Beispiel einem EEPROM abgespeichert und auf dem Steuergerät 120 (Fig. 4) oder einem lokalen Steuergerät eines Sensormoduls 110a, 110b ablauffähig ist.

Je nach Systembandbreite eines in dem Sensormodul enthaltenen Empfängers kann es zur Synchronisation und insbesondere zur Vermeidung von Übersprechen zwischen benachbarten Sensormodulen auch ausreichend sein, die chirp-Signale der benachbarten Sensormodule um eine vorgebbare Zeitdifferenz gegeneinander zeitversetzt auszusenden. D.h., in diesem Fall können beide Sensormodule gleichzeitig in den Überlappungsbereich C aussenden und ihre chirp-Signale können sich sogar - in Abhängigkeit zu der vorgebbaren Zeitdifferenz - zumindest teilweise überlappen.

Dies wird dadurch ermöglicht, dass bei geeigneter Wahl der Zeitdifferenz bereits nach dieser Zeitdifferenz das chirp-Signal des einen Sensormoduls einen hinreichend großen Frequenzabstand von dem chirp-Signal des anderen Sensormoduls aufweist. In diesem Fall liegt das chirp-Signal des einen Sensormoduls nicht mehr in einem von dem anderen Sensormodul momentan betrachteten Empfangsfrequenzbereich, der wiederum von der momentanen Frequenz seines eigenen, verzögerten chirp-Signals abhängt. Die Wahl der vorgebbaren Zeitdifferenz hängt demnach sowohl von der Frequenzänderungsgeschwindigkeit der verwendeten chirp-Signale ab als auch von der Systembandbreite des Empfängers.

**Patentansprüche**

1. Verfahren zum Betreiben eines Radarsystems (100) insbesondere eines Kraftfahrzeugs (200), **dadurch gekennzeichnet, dass** das Radarsystem (100) mindestens ein erstes Sensormodul (110a) und mindestens ein von dem ersten Sensormodul (110a) getrennt angeordnetes weiteres Sensormodul (110b) aufweist, wobei jedes Sensormodul (110a, 110b) einen Radarsensor zum Aussenden und Empfangen von Radarsignalen aufweist, wobei die Sensormodule (110a, 110b) so angeordnet und ausgebildet sind, dass ein Erfassungsbereich (A) des ersten Sensormoduls (110a) zumindest teilweise einen Erfassungsbereich (B) des weiteren Sensormoduls (110b) überlappt, und wobei das erste Sensormodul, (110a) in einem Überwachungsmodus (305) ein von dem weiteren Sensormodul (110b) ausgesandtes Sendesignal empfängt, um Informationen über den Betriebszustand des weiteren Sensormoduls (110b) zu erhalten.

2. Verfahren nach Anspruch 1, **dadurch gekennzeichnet, dass** das erste Sensormodul (110a) in Abhängigkeit der Informationen über den Betriebszustand des weiteren Sensormoduls (110b) betrieben wird.

3. Verfahren nach einem der vorstehenden Ansprüche, **dadurch gekennzeichnet, dass** als Sendesignal ein FMCW-Signal verwendet wird, bei dem die Frequenz zeitlich zwischen einer Startfrequenz (f1) und einer Stopfrequenz (f2) verändert wird.

4. Verfahren nach Anspruch 3, **dadurch gekennzeichnet, dass** ein Empfänger des ersten Sensormoduls (110a) in dem Überwachungsmodus (305) nur empfangene Signale mit einer Frequenz (f3) auswertet, die zwischen der Startfrequenz (f1) des FMCW-Signals und der Stopfrequenz (f2) des FMCW-Signals liegt.

5. Verfahren nach einem der vorstehenden Ansprüche, **dadurch gekennzeichnet, dass** eine Synchronisation des ersten Sensormoduls (110a) mit dem weiteren Sensormodul (110b) in Abhängigkeit einer Empfangszeit (t2) und einer Frequenz (f3) des empfangenen Sendesignals des weiteren Sensormoduls (110b) durchgeführt wird.

6. Verfahren nach einem der vorstehenden Ansprüche, wobei das erste und/oder das weitere Sensormodul (110, 110b) einen Radarsensor mit steuerbarer Richtcharakteristik aufweist.

7. Verfahren nach einem der vorstehenden Ansprüche, **dadurch gekennzeichnet dass** das Sensormodul (110a, 110b) periodisch in den Überwachungsmodus (305) versetzt wird.

8. Verfahren nach einem der vorstehenden Ansprüche, **dadurch gekennzeichnet, dass** das Sensormodul (110a, 110b) unmittelbar nach dessen Aktivierung in den Überwachungsmodus (305) versetzt wird.

9. Verfahren nach einem der vorstehenden Ansprüche, **dadurch gekennzeichnet, dass** das Sensormodul (110a, 110b) den Überwachungsmodus (305) nach einer vorgebbaren Wartezeit oder nach einer zufallsabhängigen Wartezeit verlässt.

10. Verfahren nach einem der vorstehenden Ansprüche, **dadurch gekennzeichnet, dass** das von dem weiteren Sensormodul (110b) ausgesandte Sendesignal in dem weiteren Sensormodul (110b) zur Messung eines Abstands zwischen dem weiteren Sensormodul (110b) und einem in dem Erfassungsbereich (B) des weiteren Sensormoduls (110b) befindlichen Objekt verwendet wird.

11. Verfahren nach einem der vorstehenden Ansprüche, **dadurch gekennzeichnet, dass** das weitere Sensormodul (110b) ein spezielles, Synchronisationsinformationen enthaltendes Sendesignal in den Erfassungsbereich (A) des Sensormoduls (110a) sendet.

12. Verfahren nach einem der vorstehenden Ansprüche, **dadurch gekennzeichnet, dass** das empfangene Sendesignal des weiteren Sensormoduls (110b) in dem ersten Sensormodul (110a) einer Quadraturdemodulation unterzogen wird.

13. Verfahren nach einem der vorstehenden Ansprüche, **dadurch gekennzeichnet, dass** mehrere Sensormodule in einem Überwachungsmodus (305) ein von dem weiteren Sensormodul (110b) ausgesandtes Sendesignal empfangen, um Informationen über den Betriebszustand des weiteren Sensormoduls (110b) zu erhalten.

14. Radarsystem (100), insbesondere für ein Kraftfahrzeug (200), **dadurch gekennzeichnet, dass** das Radarsystem (100) mindestens ein erstes Sensormodul (110a) und mindestens ein von dem ersten Sensormodul (110a) getrennt angeordnetes weiteres Sensormodul (110b) aufweist, wobei jedes Sensormodul (110a, 110b) einen Radarsensor zum Aussenden und Empfangen von Radarsignalen aufweist, wobei die Sensormodule (110a, 110b) so angeordnet und ausgebildet sind, dass ein Erfassungsbereich (A) des ersten Sensormoduls (110a) zumindest teilweise einen Erfassungsbereich (B) des weiteren Sensormoduls (110b) überlappt, und wobei das erste Sensormodul (110a) dazu ausgebildet ist, in einem Überwachungsmodus (305) ein von dem weiteren Sensormodul (110b) ausgesandtes Sendesignal zu empfangen , um Informationen über den Betriebszustand des weiteren Sensormoduls (110b) zu erhalten.

15. Radarsystem (100) nach Anspruch 14, **dadurch gekennzeichnet, dass** das Radarsystem (100) zur Ausführung des Verfahrens nach einem der Ansprüche 1 bis 13 ausgebildet ist.

16. Steuergerät (120) für ein Radarsystem (100) insbesondere eines Kraftfahrzeugs (200), **dadurch gekennzeichnet, dass** das Steuergerät (120) zur Ausführung des Verfahrens nach einem der Ansprüche 1 bis 13 ausgebildet ist.

17. Computerprogramm, **dadurch gekennzeichnet, dass** es zur Ausführung des Verfahrens nach einem der Ansprüche 1 bis 13 geeignet ist.

**Claims**

1. Method for operating a radar system (100), in particular of a motor vehicle (200), **characterized in that** the radar system (100) has at least one first sensor module (110a) and at least one further sensor module (110b) arranged separately from the first sensor module (110a), wherein each sensor module (110a, 110b) has a radar sensor for emitting and receiving radar signals, wherein the sensor modules (110a, 110b) are arranged and embodied in such a way that a detection range (A) of the first sensor module (110a) at least partially overlaps a detection range (B) of the further sensor module (110b), and wherein, the first sensor module (110a) receives, in a monitoring mode (305) a transmission signal, emitted by the further sensor module (110b), in order to obtain information about the operating state of the further sensor module (110b).

2. Method according to Claim 1, **characterized in that** the first sensor module (110a) is operated as a function of the information relating to the operating state of the further sensor module (110b).

3. Method according to one of the preceding claims, **characterized in that** an FMCW signal is used as a transmission signal, in which FMCW signal the frequency is changed chronologically between a starting frequency (f1) and a stopping frequency (f2).

4. Method according to Claim 3, **characterized in that** in the monitoring mode (305) a receiver of the first sensor module (110a) evaluates only received signals with a frequency (f3) which is between the starting frequency (f1) of the FMCW signal and the stopping frequency (f2) of the FMCW signal.

5. Method according to one of the preceding claims, **characterized in that** synchronization of the first sensor module (110a) with the further sensor module (110b) is carried out as a function of a reception time (t2) and of a frequency (f3) of the received transmission signal of the further sensor module (110b).

6. Method according to one of the preceding claims, wherein the first and/or the further sensor module (110, 110b) has a radar sensor with a controllable directional characteristic.

7. Method according to one of the preceding claims, **characterized in that** the sensor module (110a, 110b) is placed periodically in the monitoring mode (305).

8. Method according to one of the preceding claims, **characterized in that** the sensor module (110a, 110b) is placed in the monitoring mode (305) directly after its activation.

9. Method according to one of the preceding claims, **characterized in that** the sensor module (110a, 110b) exits the monitoring mode (305) after a predefinable waiting time or after a random waiting time.

10. Method according to one of the preceding claims, **characterized in that** the transmission signal which is emitted by the further sensor module (110b) is used in the further sensor module (110b) to measure a distance between the further sensor module (110b) and an object which is located in the detection range (B) of the further sensor module (110b).

11. Method according to one of the preceding claims, **characterized in that** the further sensor module (110b) transmits a specific transmission signal, containing synchronization information, into the detection range (A) of the sensor module (110a).

12. Method according to one of the preceding claims, **characterized in that** the received transmission signal of the further sensor module (110b) is subjected to quadrature demodulation in the first sensor module (110a).

13. Method according to one of the preceding claims, **characterized in that** in a monitoring mode (305) a plurality of sensor modules receive a transmission signal which is emitted by the further sensor module (110b), in order to obtain information about the operating state of the further sensor module (110b).

14. Radar system (100), in particular for a motor vehicle (200), **characterized in that** the radar system (100) has at least one first sensor module (110a) and at least one further sensor module (110b) arranged separately from the first sensor module (110a), wherein each sensor module (110a, 110b) has a radar sensor for emitting and receiving radar signals, wherein the sensor modules (110a, 110b) are arranged and embodied in such a way that a detection range (A) of the first sensor module (110a) at least partially overlaps a detection range (B) of the further sensor module (110b), and wherein the first sensor module (110a) is designed to receive, in a monitoring mode (305), a transmission signal emitted by the further sensor module (110b), in order to obtain information about the operating state of the further sensor module (110b).

15. Radar system (100) according to Claim 14, **characterized in that** the radar system (100) is designed to carry out the method according to one of Claims 1 to 13.

16. Control device (120) for a radar system (100), in particular of a motor vehicle (200), **characterized in that** the control device (120) is designed to carry to the method according to one of Claims 1 to 13.

17. Computer program, **characterized in that** it is suitable for carrying out the method according to one of Claims 1 to 13.

**Revendications**

1. Procédé d'exploitation d'un système radar (100), notamment d'un véhicule automobile (200), **caractérisé en ce que** le système radar (100) présente au moins un premier module de détection (110a) et au moins un module de détection supplémentaire (110b), disposé séparément du premier module de détection (110a), chaque module de détection (110a, 110b) présentant un capteur radar pour émettre et recevoir des signaux radar, les modules de détection (110a, 110b) étant disposés et configurés de telle sorte qu'une zone de détection (A) du premier module de détection (110a) chevauche au moins partiellement une zone de détection (B) du module de détection supplémentaire (110b), et le premier module de détection (110a), dans un mode de surveillance (305), recevant un signal d'émission émis par le module de détection supplémentaire (110b) afin d'obtenir des informations sur l'état opérationnel du module de détection supplémentaire (110b).

2. Procédé selon la revendication 1, **caractérisé en ce que** le premier module de détection (110a) est utilisé en fonction des informations relatives à l'étal opérationnel du module de détection supplémentaire (110b).

3. Procédé selon l'une des revendications précédentes, **caractérisé en ce que** le signal d'émission utilisé est un signal FMCW avec lequel la fréquence est modifiée dans le temps entre une fréquence de départ (f1) et une fréquence d'arrêt (f2).

4. Procédé selon la revendication 3, **caractérisé en ce qu'**un récepteur du premier module de détection (110a), dans un mode de surveillance (305), n'interprète que les signaux reçus à la fréquence (f3) qui se trouve entre la fréquence de départ (f1) et la fréquence d'arrêt (f2) du signal FMCW.

**5.** Procédé selon l'une des revendications précédentes, **caractérisé en ce qu'**une synchronisation du premier module de détection (110a) avec le module de détection supplémentaire (110b) est effectuée en fonction d'un instant de réception (t2) et d'une fréquence (f3) du signal d'émission reçu du module de détection supplémentaire (110b).

**6.** Procédé selon l'une des revendications précédentes, le premier module de détection et/ou le module de détection supplémentaire (110a, 110b) présentant un capteur radar ayant une caractéristique directionnelle commandable.

**7.** Procédé selon l'une des revendications précédentes, **caractérisé en ce que** le module de détection (110a, 110b) est placé périodiquement dans le mode de surveillance (305).

**8.** Procédé selon l'une des revendications précédentes, **caractérisé en ce que** le module de détection (110a, 110b) est placé dans le mode de surveillance (305) immédiatement après son activation.

**9.** Procédé selon l'une des revendications précédentes, **caractérisé en ce que** le module de détection (110a, 110b) quitte le mode de surveillance (305) après un temps d'attente qui peut être prédéfini ou après un temps d'attente dépendant du hasard.

**10.** Procédé selon l'une des revendications précédentes, **caractérisé en ce que** le signal d'émission émis par le module de détection supplémentaire (110b) est utilisé dans le module de détection supplémentaire (110b) pour mesurer un écart entre le module de détection supplémentaire (110b) et un objet qui se trouve dans la zone de détection (B) du module de détection supplémentaire (110b).

**11.** Procédé selon l'une des revendications précédentes, **caractérisé en ce que** le module de détection supplémentaire (110b) émet un signal d'émission spécial contenant des informations de synchronisation dans la zone de détection (A) du premier module de détection (110a).

**12.** Procédé selon l'une des revendications précédentes, **caractérisé en ce que** le signal d'émission reçu du module de détection supplémentaire (110b) est soumis dans le premier module de détection (110a) à une modulation en quadrature.

**13.** Procédé selon l'une des revendications précédentes, **caractérisé en ce que** plusieurs modules de détection dans un mode de surveillance (305) reçoivent un signal d'émission émis par le module de détection supplémentaire (110b) afin d'obtenir des informations sur l'état opérationnel du module de détection supplémentaire (110b).

**14.** Système radar (100), notamment pour un véhicule automobile (200), **caractérisé en ce que** le système radar (100) présente au moins un premier module de détection (110a) et au moins un module de détection supplémentaire (110b), disposé séparément du premier module de détection (110a), chaque module de détection (110a, 110b) présentant un capteur radar pour émettre et recevoir des signaux radar, les modules de détection (110a, 110b) étant disposés et configurés de telle sorte qu'une zone de détection (A) du premier module de détection (110a) chevauche au moins partiellement une zone de détection (B) du module de détection supplémentaire (110b), et le premier module de détection (110a) étant configuré pour, dans un mode de surveillance (305), recevoir un signal d'émission émis par le module de détection supplémentaire (110b) afin d'obtenir des informations sur l'état opérationnel du module de détection supplémentaire (110b).

**15.** Système radar (100) selon la revendication 14, **caractérisé en ce que** le système radar (100) est configuré pour mettre en oeuvre le procédé selon l'une des revendications 1 à 13.

**16.** Contrôleur (120) pour un système radar (100), notamment pour un véhicule automobile (200), **caractérisé en ce que** le contrôleur (120) est configuré pour mettre en oeuvre le procédé selon l'une des revendications 1 à 13.

**17.** Programme informatique, **caractérisé en ce qu'**il convient pour mettre en oeuvre le procédé selon l'une des revendications 1 à 13.

## Fig. 1

Fig. 2

Fig. 3a

Fig. 3b

Fig. 3c

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1026514 A2